**Europäisches Patentamt**

**European Patent Office**

**Office européen des brevets**

(19)

(11) Veröffentlichungsnummer: **0 134 445**
**B1**

(12) # EUROPÄISCHE PATENTSCHRIFT

(45) Veröffentlichungstag der Patentschrift:
04.02.87

(21) Anmeldenummer: 84107301.8

(22) Anmeldetag: 26.06.84

(51) Int. Cl.⁴: **C 08 J 5/08,** C 08 L 55/02,
C 03 C 25/02

(54) Glasfaserverstärkte ABS-Formmassen.

(30) Priorität: 09.07.83 DE 3324909

(43) Veröffentlichungstag der Anmeldung:
20.03.85 Patentblatt 85/12

(45) Bekanntmachung des Hinweises auf die Patenterteilung:
04.02.87 Patentblatt 87/6

(84) Benannte Vertragsstaaten:
DE FR GB IT NL

(56) Entgegenhaltungen:
DE-B-1 250 117
US-A-3 619 229

(73) Patentinhaber: BAYER AG, Konzernverwaltung RP
Patentabteilung, D-5090 Leverkusen 1 Bayerwerk
(DE)

(72) Erfinder: Zabrocki, Karl, Dr., Edelfalter 33, D-4044
Büttgen (DE)
Erfinder: Tiburtius, Christoph, Dr., Auf dem
Klemberg 41, D-5000 Köln 50 (DE)
Erfinder: Döring, Joachim, Dr., Silesiusstrasse 78,
D-5000 Köln 80 (DE)
Erfinder: Richter, Klaus, Auf der Kicken 11, D-5000
Köln 80 (DE)

EP 0 134 445 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, ABS-Kunststoffe mit Glasfasern zu verstärken. Auf diese Weise wird die Zugfestigkeit, der Biegemodul und die Wärmeformbeständigkeit verbessert. Allerdings müssen Verfärbungen bei der Verarbeitung und Rauhigkeit der Oberfläche des Fertigteils in Kauf genommen werden. Ursache für diese Störung ist wahrscheinlich die schlechte Verbindung von Glasfasern und ABS-Kunststoffen. Auf der hydrophilen Oberfläche der Glasfasern bildet sich ein dünner durch Hydratation fest haftender Wasserfilm, der chemische und physikalische Bindung zwischen der Glasoberfläche und dem organischen polymeren Material verhindert.

Um eine bessere Verbindung zu ermöglichen, hat man die Glasfasern beschlichtet, bevorzugt bei der Formgebung während des Faserziehens, d.h. mit einer mit dem Polymer kompatiblen und die Haftungseigenschaften der Glasfaser verbessernden Schicht überzogen und aus beschlichteten Fasern Stränge, Garne, Rovings oder Gewebe hergestellt. Durch Schlichtemittel kann man auf die Glasfaser unmittelbar nach ihrer Formung durch Sprühen oder Tauchen auftragen. Es muß in Form einer wäßrigen Lösung oder Dispersion vorliegen. Mit Lösungen in organischen Lösungsmitteln kann man nicht arbeiten, weil die Spinn-bushings sehr heiß sind, und eine erhebliche Entzündungsgefahr besteht.

Durch die Schlichten wird auch die Verarbeitbarkeit der Glasfasern in allen Verarbeitungsstufen in der Praxis sichergestellt; die Filamente, Fäden oder Stränge sind gegen Reibung und andere mechanische Beanspruchung durch Schmierung und Umhüllung geschützt.

Die Schlichte enthält meist
1. Filmbildner oder Klebemittel,
2. Gleitmittel oder Schmiermittel,
3. Haftvermittler,
4. Hilfsstoff (z.B. Emulgatoren und Antistatika)
5. Wasser.

In der Regel werden bis zu 2 Gew.-% Feststoff (bezogen auf Glasfaser) auf die Glasfasern aufgetragen.

Für die Verträglichkeit des Polymeren mit der Glasfaser und für die mechanischen Eigenschaften der aus der Glasfaser und dem organischen Polymeren bestehenden Formmasse ist der chemische Aufbau des Bindemittels entscheidend.

Als Filmbildner bzw. Klebemittel sind u.a. verwendet worden: Polyvinylacetat, Polyurethane, Formaldehydharze, Polyester, Polyacrylate, Epoxiharze (DE-PS 2 943 128) oder Gemische davon (US-PS 3 755 009; 3 844 821). Bevorzugt werden Filmbildner, die mit dem zu verstärkenden Polymeren verträglich sind, z.B. Polypropylen für Glasfasern, die in Polyolefine eingearbeitet werden (DE-OS 23 60 698). Aus der DE-OS 28 16 463 ist bekannt, ABS-Kunststoffe mit Glasfasern zu verstärken, die mit einer wäßrigen Emulsion eines Styrol/Acrylnitrilharzes behandelt wurden. Hier sind aber Mengen von 5 bis 30 Gew.-% des Harzes, bezogen auf Glas, erforderlich, so daß die Verarbeitung erheblich erschwert wird.

Gegenstand der Erfindung sind glasfaserverstärkte ABS-Formmassen aus
a) 60 - 98 Gew.-% eines ABS-Kunststoffes,
b) 2 - 40 Gew.-% geschlichtete Glasfaser und
c) 0 - 5 Gew.-% eines oder mehrerer Additive,
die dadurch gekennzeichnet sind, daß die Glasfaser bis zu 2 Gew.-% einer aufgetragenen Schlichte enthält, die ein Epoxigruppen enthaltendes Polymerisat und ein Copolymerisat aus einerseits Styrol, kernmethyliertem Styrol, $\alpha$-Methylstyrol, Methylmethacrylat oder Mischungen daraus und andererseits Acrylnitril enthält oder ein solches Co-Polymerisat, das selbst Epoxigruppen trägt.

Insbesondere sind Gegenstand der Erfindung glasfaserverstärkte ABS-Formmassen dieser Art, worin die Schlichte 2-95 Gew.-% Styrol/Acrylnitril oder $\alpha$-Methylstyrol/Acrylnitrilharz und 98-5 Gew.-% Epoxiharz enthält.

ABS-Kunststoffe im Sinne der Erfindung sind bevorzugt Produkte, die durch Pfropfpolymerisation von harzbildenden Monomeren auf Kautschuke entstehen, sowie die Mischungen solcher Pfropfprodukte mit aus den Pfropfmonomeren gebildeten Harzen. Im allgemeinen wird ein Gemisch von Monomeren gepfropft, das enthält einerseits Styrol, $\alpha$-Methylstyrol, einen $C_1$-$C_4$-(Meth)acrylsäureester, Maleinsäureanhydrid oder ein n-Alkyl oder n-Aryl Derivat des Maleinimids sowie Mischungen daraus und andererseits Acrylnitril oder Methacrylnitril. Bevorzugt ist ein Gemisch aus Styrol und Acrylnitril. Die eventuell zugemischten Harze sind ebenfalls aus diesen Monomeren hergestellt. Im allgemeinen entsprechen sie in ihrer Zusammensetzung den aufgepfropften Polymerisaten. Es ist auch möglich, nur die Harze alleine zu verwenden und auf die Pfropfpolymerisate ganz zu verzichten.

Besonders bevorzugt sind Mischungen aus 40 bis 100 Gew.-% Styrol/Acrylnitril-Copolymerisat mit Molgewichten $> 10^5$ und 0 bis 60 Gew.-% Pfropfkautschuk, erhalten durch Pfropfen von Styrol und Acrylnitril auf einen Kautschuk. Kautschuk ist im allgemeinen Polybutadien oder Butadien/Styrol-Copolymerisat.

Produkte dieser Art sind bekannt und beispielsweise beschrieben in den DE-PS 24 20 357, 24 20 358, den DE-OS 18 13 719 und 18 04 763 sowie den US-PS 3 509 238 und 3 928 494. Produkte mit erhöhter Wärmeformbeständigkeit sind z.B. in E-PS 41 703, US-PS 4 298 716 und US-PS 4 273 595 beschrieben. Es ist auch möglich, den ABS-Kunststoffen weitere Thermoplasten zuzufügen, z.B. Acrylharze, Polycarbonate, Polyester, Polyamid und Polyvinylchlorid.

Zur Herstellung der erfindungsgemäß beschlichteten Glasfasern sind sowohl die für die Glasseidenfabrikation verwendeten, bekannten Glastypen, wie E-, A-, C- und S-Glas, als auch die bekannten Glasstapelfasererzeugnisse geeignet. Unter den genannten Glastypen für die Herstellung von Endlosglasfasern besitzen die E-Glasfasern die größte Bedeutung für die Verstärkung von Kunststoffen, denn im Gegensatz zu A- und C-Glas ist E-Glas nahezu alkalifrei, woraus sich seine guten Elektroisolier-Eigenschaften und seine höhere Beständigkeit bei Einwirkung von Wasser oder Alkalien ableitet. Auch bezüglich der Zugfestigkeit und des Elastizitätsmoduls sind E-Glasfasern den A-Glasfasern überlegen.

Die zur Herstellung der beschlichteten Glasfasern gemäß der Erfindung notwendigen Schlichtemittel sind wäßrige Dispersionen aus Filmbildnern, Haftvermittlern, Gleitmitteln und Hilfsstoffen wie Netzmitteln oder Antistatika. Ihre Herstellung erfolgt in bekannter Weise, siehe K.L. Loewenstein: The Manufacturing Technology of Continuous Glass Fibers, Elsevier Scientific Publishing Corp. Amsterdam, London, New York (1973). Die Schlichtemittel werden auf bekannte Weise, d.h. mit Hilfe geeigneter Vorrichtungen, wie z.B. Sprüh- oder Walzensystemen auf die mit hoher Geschwindigkeit aus Spinndüsen gezogenen Glasfilamente sofort nach ihrem Erstarren, d.h. noch vor dem Aufwickeln aufgetragen. Es ist aber auch möglich, die Fasern im Anschluß an den Spinnprozeß in einem Tauchbad zu beschlichten.

Die beschlichteten feuchten Glasfasern werden anschließend bei Temperaturen von 90 - 160°C getrocknet und dann zu Rovings oder Schnitt- oder Kurzglas verarbeitet. Unter Trocknung ist dabei nicht allein die Entfernung von Wasser und anderen flüchtigen Bestandteilen zu verstehen, sondern auch das Festwerden der Schlichtebestandteile, insbesondere des Filmbildners. Erst nach beendeter Trocknung hat sich die Schlichte in eine feste Überzugsmasse verwandelt.

Die Menge an aufgetragener Schlichte beträgt $\leq$ 2 % (bezogen auf geschlichtete Faser).

Typische Schlichterezepturen bestehen aus:

a) 0,6 - 12 Gew.-% (berechnet als Feststoff) eines oder mehrerer Filmbildner,
b) 0,05 - 0,15 Gew.-% (berechnet als Feststoff) eines oder mehrerer Haftvermittler,
c) 0,05 - 1,5 Gew.-% (berechnet als Feststoff) eines oder mehrerer Gleitmittel,
d) 0,0 - 1,0 Gew.-% (berechnet als Feststoff) Hilfsstoffe,
e) ad 100 Gew.-% Wasser.

Erfindungsgemäß verwendet man als Filmbildner ein System aus einem oder mehreren Polymeren, welches Epoxigruppen sowie ein Copolymerisat aus Styrol und Acrylnitril enthält, wobei das Styrol ganz oder teilweise durch kernmethylierte Styrole, α-Methylstyrol und/oder Methylmethacrylat ersetzt werden kann. Bevorzugt werden derartige Copolymere durch wäßrige Emulsionscopolymerisation der genannten Monomeren hergestellt. Geeignet sind Polymerisate mit Molgewichten zwischen $10^4$ und $10^5$, vorzugsweise $10^5$ und $5.10^5$.

Bevorzugt eignen sich Styrol/Acrylnitril-Copolymerisate und α-Methylstyrol/Acrylnitril-Copolymersate mit einem Gewichtsverhältnis der Monomeren von 65 bis 80 zu 35 bis 20.

Für die Einführung der Epoxigruppen kann man übliche Epoxiharze- und Epoxipolyester-Systeme verwenden, wie sie bereits als Filmbildner für Glasfaserschlichten bekannt sind. Derartige Systeme sind beschrieben z.B. in den DE-OS 1 496 630, 1 669 584, 3 140 947, DOS 2 606 284, US 3 983 056, DOS 2 037 523, US 4 029 620, 2 943 128, 2 934 951; bevorzugt sind hierbei Epoxisysteme auf der Basis von Bisphenol-A-bisglycidether und seinen höheren Homologen.

Die Mengenverhältnisse der beiden Polymeren können in weiten Grenzen variieren.

Copolymer: 2 - 95 Gew.-% (bezogen auf Feststoff Filmbildner),
Epoxiharz: 98 - 5 Gew.-% (bezogen auf Feststoff Filmbildner).

Bei hohen Molgewichten des Copolymeren (M $<3·10^5$) wird man weniger Abrieb bei der Verarbeitung der Glasfaser bekommen, wenn der Anteil des Epoxiharzes < 40 % beträgt.

Bevorzugte Mengenverhältnisse liegen bei:

Copolymer: 40 - 60 % (bezogen auf Feststoff Filmbildner),
Epoxiharz: 60 - 40 % (bezogen auf Feststoff Filmbildner).

Es ist ebenfalls möglich, das Copolymer selber mit Epoxigruppen auszurüsten und auf Zusatz des Epoxiharzes ganz oder teilweise zu verzichten. Ein geeigneter Weg hierzu besteht in der Copolymerisation mit epoxigruppenhaltigen Comonomeren, z.B. Glycidestern ungesättigter Carbonsäuren wie Acrylsäure, Methacrylsäure, Malein/Fumarsäure, Itaconsäure. Die Gewichtsanteile des Epoxi-Comonomeren in der umzusetzenden Monomermischung betragen dabei 1 - 25, vorzugsweise 3 - 15 Gew.-% (bezogen auf Monomergemisch). Die Einführung von Epoxigruppen ist ebenfalls über polymerhomologe Umsetzung, z.B. Epoxidierung seitenständiger einpolymerisierter Allylgruppen möglich, jedoch ist dies nicht bevorzugt.

Das Filmbildnersystem kann mit weiteren üblichen Filmbildnern zusätzlich ausgerüstet werden, z.B. Polyvinylacetat, Polybutadien, Polyurethanen, Polyestern. Diese Filmbildner dienen vorzugsweise zur Optimierung des Verarbeitungsverhaltens der Faser; ihr Feststoff sollte 50 Gew.-%, vorzugsweise 10 % des Feststoffes des gesamten Filmbildners nicht überschreiten.

Die Mengenanteile von epoxigruppenhaltigem und epoxigruppenfreiem Polymer am Filmbildner lassen sich zusätzlich erfassen über die auch analytisch bestimmbare Konzentration an Epoxi-Sauerstoff.

Als günstig haben sich hier Mischungen bzw. Terpolymerisate herausgestellt, deren Anteil an Epoxi-Sauerstoff 7 - 350 mmol [0] / 100 g Feststoff des Filmbildners beträgt; für reine Terpolymerisate ist hierbei der Bereich von 20 - 70 mmol bevorzugt, während Mischungen mit Epoxiharzen vorzugsweise im Bereich von 7 - 350 mmol [0] / 100 g Feststoff des Filmbildners günstig sind.

Mit den erfindungsgemäßen Schlichten, insbesondere denen im Vorzugsbereich erhält man Glasfasern, die sich durch gute Verarbeitbarkeit, Abriebfestigkeit, Flusenarmut und hohe Verstärkungswirkung auszeichnen.

Als Haftvermittler werden bekannte Silan-Haftvermittler alleine oder in Kombination miteinander eingesetzt.

Die Konzentration des Silan-Haftvermittlers (wie z.B. Vinyltrimethoxysilan, Vinyltriethoxysilan, Vinyl-tris($\beta$-methoxyethoxy)-silan, $\gamma$ -Methacryloxypropyltrimethoxysilan, $\gamma$-Methacryloxypropyl-tris-($\beta$-methoxyethoxy)-silan, $\gamma$-Glycidoxypropyl-trimethoxysilan, $\beta$-(3,4-Epoxycyclohexyl)-ethyltrimethoxysilan sowie die bekannten Aminosilane und Harnstoffsilane) in den erfindungsgemäßen Schlichten beträgt 0,05 - 1,5 Gew.-%, vorzugsweise jedoch 0,15 - 0,85 Gew.-%, bezogen auf die gesamte Schlichte. Konzentrationen über 1,5 Gew.-% sind einerseits wegen der Bildung relativ dicker Silikonschichten auf den Glasfasern, die bekannterweise den Verbund zwischen den Glasfasern und dem zu verstärkenden Kunststoff eher schwächen als verbessern, unerwünscht und andererseits wegen der technisch schwer zugänglichen und daher kostspieligen Silane auch unwirtschaftlich. Bei Konzentrationen unter 0,05 Gew.-% ist die Wirksamkeit der Silan-Haftvermittler im allgemeinen nicht ausreichend. Konzentrationen zwischen 0,05 und 0,15 Gew.-% werden dann gewählt, wenn das Aufbringen der Schlichte auf die Glasfern nicht während des Spinnprozesses, d.h. in Bruchteilen einer Sekunde, sondern beispielsweise durch Tränkung der Glasfasern in einem Schlichtebad erfolgt, was aus praktischen Gründen weitaus längere Zeit erfordert, in welcher eine wesentlich höhere Ausnutzung der Schlichte möglich ist, als beim Auftrag der Schlichte während des Spinnprozesses.

Zu besonders gutem Verbund zwischen ABS-Polymer und Glasfaser führen Kombinationen aus einem Harnstoffsilan und einem Epoxisilan, wobei beide zu etwa gleichen Gew.-Tln. eingesetzt werden.

Die erfindungsgemäßen Schlichten enthalten nicht-ionische oder/und kationische Gleitmittel, die z.B. aus folgenden Stoffgruppen bestehen können:

Polyalkylenglykolether von Fettalkoholen oder Fettaminen, Polyalkylenglykolester und Glycerinester von Fettsäuren mit 12 - 18 C-Atomen, Polyalkenylglykole, höhere Fettsäureamide mit 12 - 18 C-Atomen von Polyalkylenglykolen und/oder Alkenylaminen, quartäre Stickstoffverbindungen z.B. ethoxylierte Imidazoliniumsalze, Mineralöle, Wachse.

Das Gleitmittel wird vorteilhaft allein oder in Kombination mit anderen in einer Gesamtkonzentration zwischen 0,05 und 1,5 Gew.-%, bezogen auf die gesamte Schlichte, angewendet.

Darüber hinaus können die Schlichten übliche Hilfsstoffe wie Emulgatoren, Kolloidhilfsmittel, Netzmittel, Colöser sowie Antistatika, z.B. Lithiumchlorid, Ammoniumchlorid, Cr-III-Salze, organ. Titanverbindungen, Arylalkylsulfate oder -sulfonate, Arylpolyglykolethersulfonate oder quartäre Stickstoffverbindungen, enthalten. Falls sie allein oder in Kombination miteinander eingesetzt werden, beträgt ihre Konzentrationen 0,01 bis 1,0 Gew.-%.

Den Formmassen der Erfindung können bei der Herstellung, Aufarbeitung, Weiterverarbeitung und Entformung erforderliche und zweckdienliche Additive, z.B. Antioxidantien, UV-Stabilisatoren, Peroxidzerstörer, Antistatika, Gleitmittel, Flammschutzmittel, Füllstoffe und Farbmittel in üblicher Weise zugesetzt werden.

Die erfindungsgemäßen Formmassen kann man herstellen durch Mischen der Komponenten in den angegebenen Mengen auf üblichen Aggregaten zur Kunststoffverarbeitung wie Walzenstühlen, Mischextruder oder Innenkneter. Eine besondere Ausführungsform besteht in der Verwendung eines Mischextruders, in den die Glasfasern direkt vom Roving als Endlos-Faser eingezogen und eingearbeitet werden. Hierbei bleiben die Fasern länger, was sich in verbesserten mechanischen Eigenschaften des Formteils auswirkt.

Die erfindungsgemäßen Kunststoffe können auf üblichen Verarbeitungsaggregaten verarbeitet werden z.B. durch Spritzguß, Plattenextrusion, gegebenenfalls mit anschließender Warmverformung, Extrusion von Rohren und Profilen und Kalander-Verarbeitung.

Die erfindungsgemäß beschlichteten Glasfasern lassen sich problemlos in die Thermoplastschmelze einarbeiten, wobei ein guter Verbund zwischen ihnen und der Thermoplastmatrix entsteht.

## Beispiele

**Herstellung der beschlichteten Glasfasernz**

Folgende Rohstoffe wurden verwendet:

A Copolymer-Latex aus 69 Tln. $\alpha$-Methylstyrol + 31 Tln. Acrylnitril.
B Copolymer-Latex aus 72 Tln. Styrol + 28 Tln Acrylnitril.
C Copolymer-Latex aus 68,4 Tln. Styrol + 26,6 Tln. Acrylnitril + 5,0 Tln. Glycidylmethacrylat.
D Aliphatische Polyester-Polyurethan-Dispersion.
E Epoxiharz-Dian-Dispersion.
F Harnstoff-funktionelles Silan.
G Epoxi-funktionelles Silan.
H Fettsäureamid (Persoftal ®FN der BAYER AG) als Gleitmittel.

Die Schlichtemischungen wurden nach bekanntem Verfahren (S. Loewenstein, loc. cit.) durch Zugabe der Silane, Filmbildner, Gleitmittel zur wäßrigen Flotte in dieser angegebenen Reihenfolge hergestellt. Das End-pH wurde auf Werte von 6,0 bis 8,5 justiert.

Die in Tabelle 1 angegebenen Mengen für A bis H sind g Festsubstanz pro 100 g Gesamt-Schlichte.

Die Schlichtemittel wurden im Tauchverfahren auf Glasfaserstränge von 11 µm bzw. 14 µm Durchmesser aufgetragen und bei 110 - 160°C getrocknet. Danach wurde der Schlichteauftrag in Gew.-%, d.h. g getrockneter Schlichte pro 100 g Glasfaser gemessen (Tabelle 1).

Die beschlichteten Glasfasern wurden nach bekanntem Verfahren zu Kurzglas-Strängen von 6 mm Faserlänge verarbeitet.

## Herstellung und Prüfung der ABS-Formkörper

3085 Tle. eines ABB-Pulvers auf α-Methylstyrol-Basis mit einem Polybutadienanteil von 11,5 %, welches hergestellt wurde durch Abmischung von 77,5 Teilen eines α-Methylstyrol/Acrylnitril (Gewichtsverhältnis 69 : 31) Copolymeren mit 22,5 Teilen eines Pfropfpolymerisats, wobei letzteres hergestellt wurde durch Polymerisation von 11,5 Teilen einer Styrol-Acrylnitril-Mischung (Gewichtsverhältnis 72 : 28) in Gegenwart von 11,5 Teilen (gerechnet als Feststoff) eines Polybutadienlatex, wurden mit 617 g der beschlichteten Kurzglasfaser auf einem Kneter vermischt, granuliert und anschließend bei einer Massetemperatur von 240°C zu Prüfplatten von ca. 75 x 155 x 2 mm verspritzt.

Zur Beurteilung der Schlichtematerialien und Formkörper wurden herangezogen:
- die Verarbeitbarkeit der beschlichteten Glasfaser, qualitativ beurteilt nach der Abriebfestigkeit und Flusenbildung beim Verarbeitungsprozeß;
- die farbmetrische Bestimmung der Spritzkörper gemäß DIN 6174; als Farbstandard diente ein unter gleichen Bedingungen mit einer handelsüblichen, für ABS-Materialien vorgesehenen Glasfaser (Produkt 414 x 17 der Fa. Owens Corning) hergestellter Prüfkörper;
- die Ermittlung der aus 3 Messungen gemittelten Rauhtiefe der Prüfkörper gemäß DIN 4768 und der ebenso gemittelten maximalen Rauhtiefe gemäß DIN 4762/1 (Entwurf) bzw. ISO/DIS 42S7/1 (Entwurf).

Tabelle 1 gibt eine Übersicht über die Rezepturen und Prüfdaten. Die Überlegenheit des erfindungsgemäßen Systems ist damit gezeigt.

**Tabelle 1** Beispiele und Vergleichsversuche

| Beispiel Vergleichs-versuche | A | B | C | D | E | F | G | H | Schlichte-auftrag Gew.-% | Verarbeit-barkeit | DL | DE | maximale R_t | gemittelte R_z |
|---|---|---|---|---|---|---|---|---|---|---|---|---|---|---|
| | | | | | g Festsubstanz pro 100 g Schlichte | | | | | | farbmetrische Bestimmung nach Cielab | | Messung der Rauhtiefe nach DIN | |
| W a) | 3,0 | – | – | 3,0 | – | 0,3 | 0,3 | 0,25 | 0,86 | gut | -1,6 | 2,9 | 14,3 | 6,9 |
| b) | 4,0 | – | – | 4,0 | – | 0,3 | 0,3 | 0,25 | 1,05 | gut | -3,0 | 4,9 | 11,2 | 7,1 |
| c) | – | – | – | – | 4,2 | 0,21 | 0,21 | 0,17 | 0,58 | gut | -0,5 | 1,3 | 11,2 | 6,2 |
| d) | – | 4,0 | – | – | – | 0,3 | 0,3 | 0,25 | nicht bestimmbar | nicht möglich; starker Abrieb. | | | | |
| e) | 4,0 | – | – | – | – | 0,3 | 0,3 | 0,25 | | | | | | |
| Bsp. 1 | – | – | 7,5 | – | – | 0,3 | 0,3 | 0,25 | 0,80 | gut | +2,4 | 3,3 | 7,5 | 4,5 |
| " 2 | – | – | 2,1 | – | 2,1 | 0,21 | 0,21 | 0,17 | 0,65 | gut | +0,4 | 1,1 | 8,9 | 5,7 |
| " 3 | 3,0 | – | – | – | 3,0 | 0,3 | 0,3 | 0,25 | 0,74 | gut | +0,5 | 1,2 | 8,8 | 5,5 |
| " 4 | 2,1 | – | – | – | 2,1 | 0,21 | 0,21 | 0,17 | 0,61 | gut | +0,6 | 1,0 | 8,3 | 5,5 |

## Patentansprüche

1. Glasfaserverstärkte ABS-Formmassen aus
a) 60 - 98 Gew.-% eines ABS-Kunststoffes
b) 2 - 40 Gew.-% geschlichteter Glasfaser
c) 0 - 5 Gew.-% eines oder mehrerer Additive
dadurch gekennzeichnet, daß die Glasfaser bis zu 2 Gew.-% einer aufgetragenen Schlichte enthält, die ein Epoxigruppen enthaltendes Polymerisat und ein Copolymerisat aus einerseits Styrol, kernmethyliertem Styrol, α-Methylstyrol, Methylmethacrylat oder Mischungen daraus und andererseits Acrylnitril enthält oder ein solches Copolymerisat, das selbst Epoxigruppen trägt.

2. Glasfaserverstärkte ABS-Formmassen nach Anspruch 1, worin die Schlichte 2 - 95 Gew.-% Styrol/Acrylnitril oder α-Methylstyrol/Acrylnitrilharz und 98 - 5 Gew.-% Epoxiharz enthält.

**0 134 445**

## Claims

1. Glass-fibre-reinforced ABS moulding compositions consisting of
a) 60 - 98% by weight of an ABS plastic,
b) 2 - 40% by weight of sized glass fibre, and
c) 0 - 5% by weight of one or more additives,
characterised in that the glass fibre contains up to 2% by weight of an applied size which contains a polymer containing epoxy groups and a copolymer of, on the one hand, styrene, nuclear-methylated styrene, α-methylstyrene, methyl methacrylate or mixtures thereof and, on the other hand, acrylonitrile, or such a copolymer which itself contains epoxy groups.

2. Glass-fibre-reinforced ABS moulding compositions according to Claim 1, wherein the size contains 2 - 95% by weight of styrene/acrylonitrile or α-methylstyrene/acrylonitrile resin and 98 - 5% by weight of an epoxy resin.

## Revendications

1. Matières à mouler en ABS renforcés par des fibres de verre, consistant en
a) 60 - 98% en poids d'une matière plastique ABS
b) 2 - 40% en poids de fibre de verre ensimée
c) 0 - 5% en poids d'un ou plusieurs additifs caractérisées en ce que la fibre de verre contient jusqu'à 2% en poids d'un produit d'ensimage appliqué, qui contient un polymère à groupes époxy et un copolymère de styrène, styrène méthylé au noyau α-méthylstyrène, méthacrylate de méthyle ou leurs mélanges, d'une part, et d'acrylonitrile, d'autre part, ou d'un tel copolymère qui porte lui-même des groupes époxy.

2. Matières à mouler en ABS renforcées par des fibres de verre selon la revendication 1, dans lesquelles le produit d'ensimage contient 2 - 95 % en poids d'une résine styrène/acrylonitrile ou α-méthylstyrène/acrylonitrile et 98 - 5% en poids d'une résine époxydique.

6